# EUROPEAN PATENT APPLICATION

(11) **EP 2 846 302 A1**
(43) Date of publication of application: **11.03.2015**
(21) Application number: 13306221.6
(22) Date of filing: 06.09.2013
(51) Int. Cl.: G06Q 30/06, G06Q 20/30

(54) **Communication device, method for establishing a transaction between said communication device and a terminal**

(71) Applicant: Gemalto SA, 92190 Meudon (FR)
(72) Inventor: Leroy, Pascal, 92190 Meudon (FR); Normend, Yoan, 92190 Meudon (FR); Bouzidi, M'Hamed, 92190 Meudon (FR)
(74) Representative: Cour, Pierre

(57) **Abstract**

The present invention relates to a communication device (CD) comprising:
- communication means (CM) with a tactile screen (TS) of a terminal (TM),
- a non-volatile memory (MEM) comprising an user application (U_APP), said user application (U_APP) being adapted for interacting with a terminal application (T_APP) of the terminal (TM) via communication means (CM),
- a processing unit (PU) interacting with the communication means (CM) and the non-volatile memory (MEM).

## Description

### FIELD OF THE INVENTION

The present invention relates to a communication device and a method for establishing a transaction between such a communication device and a terminal.

### BACKGROUND

Currently, there are different options for establishing a communication between different mobile electronic devices, in particular an electronic transaction between a mobile device and a terminal. Devices equipped with a tactile screen are more and more numerous and interact with each other across networks, applications and direct connexions such as Bluetooth or USB links. Interconnexion needs for these devices are growing.

However, the increase of data exchange protocols and standards harms the interoperability of mobile devices produced by different manufacturers. Moreover, the different connectors restrain the operability of links between electronic devices. Besides, for design and compactness reasons, more and more devices do not comprise any connectors anymore.

Alternative means can be used for outweighing these constraints. For example, communication by means of sound could allow standard and common data exchanges, using the microphone and/or the loudspeaker of a mobile device. However, this solution implies a sound annoyance, and prevents using the microphone and/or the loudspeaker for its intended utilisation.

### SUMMARY

It is an object of the invention to provide a personal communication device, of easy use, allowing interaction with a terminal so as to realize an electronic transaction.

To this end, the invention provides a communication device comprising communication means, a non-volatile memory and a processing unit. The communication means are capable to communicate with a tactile screen of a terminal. The non-volatile memory comprises a user application, said user application being adapted for interacting with a terminal application of the terminal via communication means. The processing unit interacts with the communication means and the non-volatile memory.

According a preferred embodiment, the processing unit is adapted for generating a command sequence from data provided by the user application, and the communication means comprise at least an actuator for generating a sequence of active contacts on the tactile screen, from said command sequence.

Preferentially, the communication means may comprise optoelectronic means for detecting a sequence of luminous impulsions from the tactile screen, and the processing unit is adapted for converting said sequence into data, and providing said data to the user application.

According different possible design, the communication device may comprise display means connected with the processing unit, for displaying data. The communication device may comprise a keyboard connected with the processing unit, for entering data.

The invention relates to a method for launching and configuring a terminal application of a terminal between a communication device as previously defined, and a terminal comprising a tactile screen and a terminal application. The method comprises:
- positioning the communication device onto the tactile screen of the terminal
- launching the terminal application by the communication means
- emitting of configuration data from the communication device, comprising:
   - transmitting of configuration data to the processing unit, by the user application
   - communicating said configuration data to the terminal by the communication means,
- configuring the terminal application by the terminal, by means of the configuration data.

According to different possible design, the terminal application is launched by a touch simulation on the tactile screen of the terminal.

The invention also relates to a method for paying a transaction amount by a communication device as previously defined, through a terminal comprising a tactile screen and a terminal application. The method comprises:
- positioning the communication device onto the tactile screen of the terminal
- sending a transaction order from the user application to the processing unit
- emitting of a transaction order from the communication device to the terminal by the communication means.

According a particular design, the transaction order is communicated to the terminal by a sequence of active contacts on the tactile screen of the terminal.

According different choice of design, the method may comprises receiving a transaction amount by communication means from the terminal application and checking that said transaction amount is inferior or equal to a money amount stored in the non-volatile memory by the user application. Alternately, the method may comprise entering a transaction amount through a keyboard of a communication device, said keyboard being connected with the processing unit.

According to a particular embodiment, the invention relates to a method for performing real-time gaming by a communication device as previously defined, through a terminal comprising a tactile screen and a terminal application. The method comprises performing steps of the method for launching and configuring a terminal application, so as to launch the terminal application and performing steps of the method for paying a transaction amount.

### BRIEF DESCRIPTION OF THE DRAWINGS

Some embodiments of apparatus and/or methods in accordance with embodiments of the present invention are now described, by way of example only, and with reference to the accompanying drawings, in which:
- figure 1 shows a communication system according to a not limited embodiment of the invention, comprising a communication device, a terminal and a server;
- figure 2 shows a method for launching and configuring a terminal application of the terminal, by the communication device, according to a not limited embodiment of the invention;
- figure 3 shows a method for paying a transaction amount by the communication device through the terminal, according to a not limited embodiment of the invention;
- figure 4 shows a method for performing real-time gaming by the communication device through the terminal.

### DESCRIPTION OF EMBODIMENTS

In the following description, well-known functions or constructions by the man skilled in the art are not described in detail since they would obscure the invention in unnecessary detail.

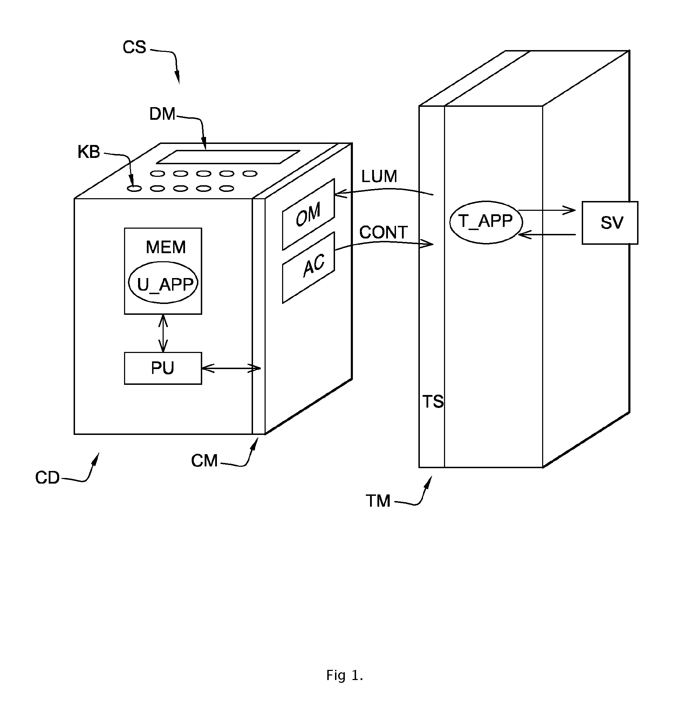

Figure 1 schematically illustrates a communication system CS according to a non-limited embodiment of the invention. Said communication system CS comprises a communication device CD and a terminal TM. The communication system CS also comprises a server SV, which is optional.

The terminal TM comprises:
- a tactile screen TS
- a terminal application T_APP which is processed by processing means of the terminal TM.

Such a terminal TM is for example a Smartphone, a tablet, or any other kind of smart device having a touch screen.

The communication device CD comprises:
- communication means CM with the tactile screen TS of the terminal TM, comprising:
   - at least an actuator AC for generating a sequence of active contacts CONT on the tactile screen TS, from a command sequence
   - optoelectronic means OM for detecting a sequence of luminous impulsions LUM from the tactile screen TS

- a non-volatile memory MEM comprising an user application U_APP, said user application U_APP being adapted for interacting with the terminal application T_APP of the terminal TM via communication means CM,
- a processing unit PU interacting with the communication means CM and the non-volatile memory MEM, adapted for:
   - generating a command sequence from data provided by the user application U_APP
   - converting a sequence of luminous impulsions into data, and providing said data to the user application U_APP
- a keyboard KB for entering alpha-numerical symbols, or alternately a plurality of push button,
- display means DM for displaying alpha-numerical symbols.

It should be noted that the keyboard KB, the display means DM, and the plurality of push buttons are optional. Their advantages will be described hereafter. It should also be noted that in another embodiment, the communication device CD comprises only one push button.

Communication between the communication device CD and the terminal TM is bidirectional:
- the communication device CD sends data to the terminal TM by means of active contacts CONT;
- the terminal TM sends data to the communication device CD by means of luminous impulsions LUM.

Such a bidirectional communication is possible when the communication device CD is positioned onto the tactile screen TS of the terminal TM.

In the described embodiment, the tactile screen TS of the terminal TM is of capacitive technology. Thus, the actuator AC comprises a plate for locally varying the charge load of areas of the capacitive tactile screen TS, when the communication device CD is positioned onto said tactile screen TS. An active contact comprises a touch simulation made by a charge transfer between the plate of the actuator and a corresponding plate of the tactile screen TS. An active contact CONT then simulates a tactile touch, that is to say a contact with a finger.

The accumulation of electrical charge on the glass plate during the active contact CONT transmits a part of this charge to the actuator AC, which causes a deficit that the terminal TM may localize. Moreover, the terminal TM is adapted for converting a sequence of active contacts CONT into numerical data, via a calculation algorithm. The locations, frequencies, durations or pressure level of said active contacts CONT can be determined and used for performing said converting.

The sequence of active contacts CONT is generated by the actuator AC from a command sequence, said command sequence being calculated by the processing unit PU. The command sequence corresponds:
- either with numerical data, said numerical data being either stored in the non-volatile memory MEM, or entered through the keyboard KB
- or with a result of a compilation, like challenge-response or query-response sequence.

The terminal TM is adapted for emitting luminous impulsions LUM on the tactile screen TS. Luminous impulsions LUM are emitted sequentially or simultaneously in different areas of the tactile screen TS. The optoelectronic means OM of the communication device CD comprise captors for detecting a sequence of luminous impulsions LUM, and an algorithm for analyzing and converting said sequence into numerical data. The locations, frequencies, durations, intensities, or RVB codes of said luminous impulsions LUM can be determined and used for performing said analyzing and converting.

In a non-limited embodiment, the terminal TM is adapted for communicating with a distant server SV through a network interface NI. As an example, the distant server SV is a banking server SV. To this purpose, a wireless connection is triggered by the application APP of the terminal TM. The network interface can be for example a phone network interface compatible with a mobile phone standard (GSM, IS95, UMTS, IS2000, LTE, HSPA or other), or another kind of interface for connecting internet like Wi-Fi or Ethernet.

In an embodiment, the server SV can provide some numerical data to the terminal TM, which are afterwards communicated to the communication device CD through luminous impulsions LUM.

The communication system CS permits to perform transactions between the communication device CD and the terminal TM, said transactions possibly involving the server SV. A transaction is an exchange of data: first data are transmitted from the communication device CD to the terminal TM, and second data are transmitted from the terminal TM to the communication device CD. It should be noted that the transaction can be predated with an initialization phase: as an example, the communication device CD and the terminal TM exchange hardware parameters, for example their type or their available performances. It should also be noted that a transaction can be a succession of data exchange.

A method for establishing a transaction between the communication device CD and the terminal TM comprises:
- a positioning of the communication device CD onto the tactile screen TS so as to define a first area and a second area of the tactile screen TS. The first area is involved into a data transfer from the communication device CD to the terminal TM, whereas the second area is involved into a data transfer from the terminal TM to the communication device CD. The first area and the second area are possibly approximately identical.
- an emission of first numerical data from the communication device CD, comprising:
   - the converting of first numerical data into a command sequence by the processing unit PU,
   - the generating of a sequence of active contacts CONT on the first area, from said command sequence, by the actuator AC,
- a reception of second numerical data by the optoelectronic means OM, comprising:
   - the detecting of a sequence of luminous impulsions LUM from the second area,
   - the converting of said sequence of luminous impulsions LUM into second numerical data, by the processing unit PU.

First data comprise data stored in the non-volatile memory MEM of the communication device CD and/or data possibly entered via the keyboard KB of the communication device CD. Indeed, the non-volatile memory MEM and the keyboard KB are adapted for transmitting data to the processing unit PU.

Moreover, second data are possibly displayed by display means DM of the communication device CD. For example, display means DM comprise a digital screen for displaying alpha-numerical symbols.

Three use cases are described hereafter, involving transactions between the communication device CD and the terminal TM. In a first use case, the communication device CD launches and automatically configures the application APP set up on the terminal TM. In a second use case, the communication device CD is an electronic purse: it performs financial transactions with the terminal TM. In a third use case, the communication device CD permits to perform real-time gaming or betting during a live event, such as a rugby match.

### First use case: application configuration

The communication device CD comprises configuration data stored into the non-volatile memory MEM, said configuration data comprising specific parameters and/or a user profile for configuring the terminal application T_APP set up on the terminal TM. The terminal application T_APP is for example a social networking application requiring a login and a password. In this case, said login and password are stored in the non-volatile memory MEM. Configuration data can also be regional settings, user's signature, keys for unlocking secure documents, menus selections, or any personal user's setting.

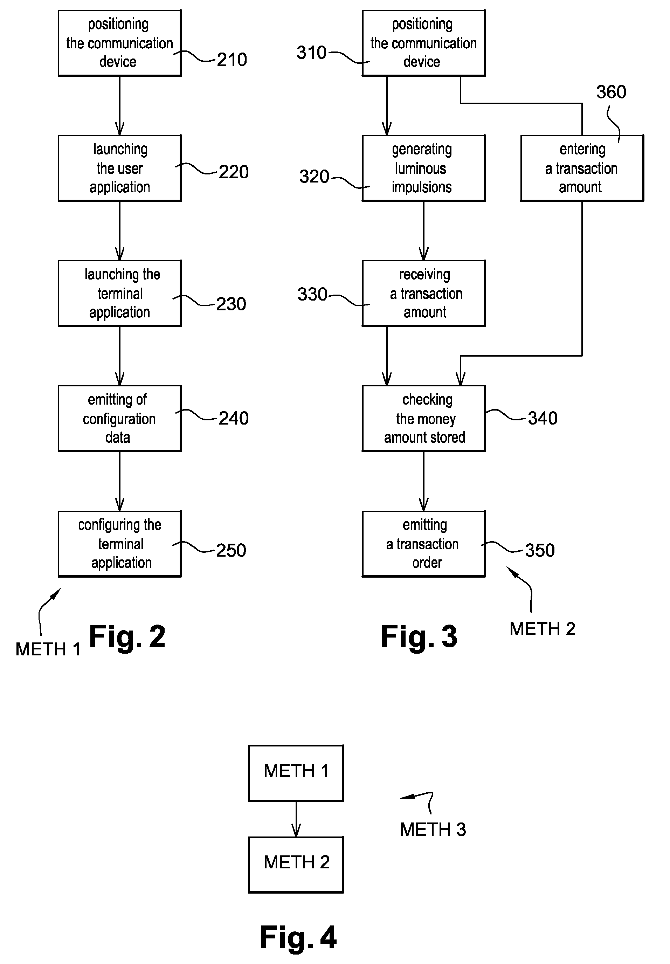

The terminal TM might comprise several icons corresponding to several applications set up on said terminal TM. With reference to figure 2, the method METH1 for launching and configuring the terminal application T_APP comprises:
- step 210: positioning the communication device CD onto the tactile screen TS of the terminal TM. In a preferred embodiment, the communication device CD is positioned on the icon corresponding to the terminal application T_APP. In this embodiment, the first area and the second area comprise the icon area.
- step 220: launching the user application U_APP, for example by activation of a push button by the user,
- step 230: launching the terminal application T_APP by an active contact simulating a tactile touch on the icon.
- step 240: starting a communication through the touch screen TS with the communication means CM then emitting of configuration data from the communication device CD, comprising:
   - the transmitting of configuration data from the non-volatile memory MEM to the processing unit PU, by the user application U_APP
   - the converting of configuration data into a command sequence by the user application U_APP,
   - the generating of a sequence of active contacts CONT on the first area, from said command sequence, by the actuator AC,
- step 250: configuring the terminal application T_APP by the terminal TM, by means of the configuration data. The application parameters are making match the configuration data. This step may further include:
- generating a sequence of luminous impulsions LUM on the touch screen TS by the terminal TM, corresponding with second numerical data provided by the terminal application T_APP. Second numerical data are for example acquittal data.
- receiving of second numerical data by the optoelectronic means OM, comprising:
   - the detecting of a sequence of luminous impulsions LUM from the second area,
   - the converting of said sequence of luminous impulsions LUM into second numerical data.

The communication device CD can launch applications and specific environment using personal data stored in the communication device CD itself. The communication device CD is acting for authentication, enabling features linked to the communication device CD owner or selecting options. The communication device CD then allows configuring easily applications which are designed to use the communication device CD management data.

### Second use case: electronic purse

The communication device CD can be used as an electronic purse. Then, the communication device CD comprises a non material money amount stored into the non-volatile memory MEM. So as to "recharge" the electronic purse, that is to say transfer non material money from a banking account to the non-volatile memory MEM of the communication device CD, personal data are also stored into the non-volatile memory MEM. Said personal data are related to a banking account. These personal data are for example an account number, a password for accessing said account, the name of the holder of said account, etc. Besides, the terminal application T_APP set up on the terminal TM is a banking application, said terminal application T_APP being able to trigger a communication between a banking server SV and the terminal TM.

With reference to figure 3, the method METH2 for paying a transaction amount via the communication device CD comprises:
- step 310: positioning the communication device CD onto the tactile screen TS of the terminal TM. In a preferred embodiment, the communication device CD comprises an auto-positioning function, allowing placing the communication device CD with any orientation on the tactile screen TS.
- step 320: generating a sequence of luminous impulsions LUM on the touch screen, by the terminal TM, corresponding to a transaction amount provided by the terminal application T_APP.
- step 330: receiving of the transaction amount by the optoelectronic means OM, comprising:
   - the detecting of a sequence of luminous impulsions LUM from the second area,
   - the converting of said sequence of luminous impulsions LUM into second numerical data.
- step 340: checking that said transaction amount is inferior or equal to the money amount stored in the non-volatile memory MEM. If said transaction amount is inferior or equal to the money amount stored in the non-volatile memory MEM, then:
- step 350 : emitting of a transaction order from the communication device CD, comprising:
   - the converting of the transaction order into a command sequence by the processing unit PU,
   - the generating of a sequence of active contacts CONT on the first area, from said command sequence, by the actuator AC.

It should be noted that in another embodiment, the steps 320, 330 of generating a sequence of luminous impulsions LUM and receiving the transaction amount can be replaced by a step 360 of entering a transaction amount through the keyboard KB of the communication device CD. Thus, a user can manually select the amount of the transaction.

On demand or if the transaction amount is superior to the money amount stored in the non volatile memory MEM, the communication device CD can be "recharged" of a recharge amount. A method for recharging the communication device CD comprises:
- positioning the communication device CD onto the tactile screen TS of the terminal TM
- entering a recharge amount through the keyboard KB of the communication device CD
- emitting of a recharge order by the communication device CD, comprising:
   - converting of recharge order into a command sequence by the processing unit PU,
   - generating of a sequence of active contacts CONT on the first area, from said command sequence, by the actuator AC,
- triggering a wireless communication between the terminal TM and the banking server SV, by the terminal application T_APP.
- sending the recharge order from the terminal TM to the server SV
- receiving a recharge agreement by the terminal TM from the server SV
- receiving of the recharge agreement by the optoelectronic means OM, comprising:
   - detecting of a sequence of luminous impulsions LUM from the second area,

   - converting of said sequence of luminous impulsions LUM into numerical data
- increasing the money amount stored in the non volatile memory MEM by the recharge amount.

In this use case, the owner of the communication device CD can pay limited amounts in stores and shops, for example bars or groceries, where terminals TM are installed for payment. The owner can also recharge the communication device CD through these terminals TM through a banking application APP linked to his bank. The application APP may use secured pipe for the transaction, for example a One-Time Password (OTP), a signature, a real time clock stamping, etc.

Besides, the push buttons of the communication device CD can be used for selecting an operation: payment or recharge.

### Third use case: real-time gaming

The communication device CD can also be used for performing real-time gaming or betting during a live event. With reference to figure 4, the invention also provides a method METH3 for performing real-time gaming by the communication device CD through the terminal TM.

In this third embodiment, the terminal TM is advantageously the own Smartphone or tactile tablet of the user of the communication device CD.

Rights or scope of gaming are firstly enabled by the communication device CD, using the method METH1 for configuring an application described in the first embodiment. Indeed, configuration data stored in the non-volatile memory MEM comprise for example the login and the password of a user for opening a session on a dedicated terminal application T_APP set up on the terminal TM. This terminal application T_APP is loaded into the terminal TM and allows connection between said terminal TM and a distant server SV, for example via GSM or Internet, to interact and play during the live event.

In an embodiment, when the communication device CD is positioned on a specific area of the tactile screen TS of the terminal TM, a message is sent automatically, for example via an SMS or via a Wi-Fi connection if available, to the operator or the event organizer.

Thus, the user is informed or asked to interact with the terminal application T_APP during the event via a SMS or a MMS or any possibility offered by a wireless connection such as Wi-Fi for broadband communication, sent by the operator or the event organizer. The online participation can be done all along the event live, using the method METH2 for paying a transaction amount described in the second embodiment. The participation to the betting session can be done during the live event, because of connection to the server through the wireless connection. Leaving the event will/may close the betting session (for example Rugby/football match, horses races...).

## Claims

1. Communication device (CD) comprising:
- communication means (CM) with a tactile screen (TS) of a terminal (TM),
- a non-volatile memory (MEM) comprising an user application (U_APP), said user application (U_APP) being adapted for interacting with a terminal application (T_APP) of the terminal (TM) via communication means (CM),
- a processing unit (PU) interacting with the communication means (CM) and the non-volatile memory (MEM).

2. Communication device (CD) according to claim 1, wherein:
- the processing unit (PU) is adapted for generating a command sequence from data provided by the user application (U_APP), and
- the communication means (CM) comprise at least an actuator (AC) for generating a sequence of active contacts (CONT) on the tactile screen (TS), from said command sequence.

3. Communication device (CD) according to any of the previous claims, wherein:
- the communication means (CM) comprise optoelectronic means (OM) for detecting a sequence of luminous impulsions (LUM) from the tactile screen (TS), and
- the processing unit (PU) is adapted for converting said sequence into data, and providing said data to the user application (U_APP).

4. Communication device (CD) according to any of the previous claims, comprising display means (DM) connected with the processing unit (PU), for displaying data.

5. Communication device (CD) according to any of the previous claims, comprising a keyboard (KB) connected with the processing unit (PU), for entering data.

6. Method (METH1) for launching and configuring a terminal application (T_APP) of a terminal (TM) between:
- a communication device (CD) according to any of the previous claims, and
- a terminal (TM) comprising a tactile screen (TS) and a terminal
application (T_APP),
comprising:
- positioning the communication device (CD) onto the tactile screen (TS) of the terminal (TM)
- launching the terminal application (T_APP) by the communication means (CM)
- emitting of configuration data from the communication device (CD), comprising:
• transmitting of configuration data to the processing unit (PU), by the user application (U_APP)
• communicating said configuration data to the terminal (TM) by the communication means (CM),
- configuring the terminal application (T_APP) by the terminal (TM), by means of the configuration data.

7. Method (METH1) according to claim 6, wherein the terminal application (T_APP) is launched by a touch simulation on the tactile screen (TS) of the terminal (TM).

8. Method (METH1) according to claim 6 or claim 7, wherein the configuration data are communicated to the terminal (TM) by a sequence of active contacts (CONT) on the tactile screen (TS) of the terminal (TM).

9. Method (METH2) for paying a transaction amount by a communication device (CD) according to any of claims 1 to 5, through a terminal (TM) comprising a tactile screen (TS) and a terminal application (T_APP), comprising:
- positioning the communication device (CD) onto the tactile screen (TS) of the terminal (TM)
- sending a transaction order from the user application (U_APP) to the processing unit (PU)
- emitting of a transaction order from the communication device (CD) to the terminal (TM) by the communication means (CM).

10. Method (METH2) according to claim 9, wherein the transaction order is communicated to the terminal (TM) by a sequence of active contacts (CONT) on the tactile screen (TS) of the terminal (TM).

11. Method (METH2) according to claim 9 or claim 10, comprising:
- receiving a transaction amount by communication means (CM), from the terminal application (T_APP)
- checking that said transaction amount is inferior or equal to a money amount stored in the non-volatile memory (MEM), by the user application (U_APP).

12. Method (METH2) according to claim 11, wherein the transaction amount reception comprises receiving a sequence of luminous impulsions (LUM) from the tactile screen (TS).

13. Method (METH2) according to claim 9 or claim 10, comprising:
- entering a transaction amount through a keyboard (KB) of a communication device (CD), said keyboard (KB) being connected with the processing unit (PU).

14. Method (METH2) according to any of claims 11 to 13, comprising displaying the transaction amount by display means (DM) connected with the processing unit (PU).

15. Method (METH3) for performing real-time gaming by a communication device (CD) according to any of claims 1 to 5, through a terminal (TM) comprising a tactile screen (TS) and a terminal application (T_APP), comprising:
- performing steps of a method (METH1) for launching and configuring a terminal application according to any of claims 6 to 8, so as to launch the terminal application (T_APP)
- performing steps of a method (METH2) for paying a transaction amount according to any of claims 9 to 14.
